# EUROPEAN PATENT SPECIFICATION

(11) **EP 4 289 750 B1**
(45) Date of publication and mention of the grant of the patent: **07.05.2025**
(21) Application number: 23177296.3
(22) Date of filing: 05.06.2023
(51) Int. Cl.: B65B 9/12, B65B 9/20, B33Y 80/00, B29C 64/00, B65B 9/22

(54) **FORMING DEVICE FOR A PACKAGING ASSEMBLY FOR FORMING AND SEALING A PLURALITY OF PACKAGES CONTAINING A POURABLE PRODUCT AND PACKAGING ASSEMBLY**
FORMVORRICHTUNG FÜR EINE VERPACKUNGSANORDNUNG ZUM FORMEN UND VERSIEGELN EINER VIELZAHL VON VERPACKUNGEN MIT EINEM FLIESSFÄHIGEN PRODUKT UND VERPACKUNGSANORDNUNG
DISPOSITIF DE FORMAGE POUR UN ENSEMBLE D'EMBALLAGE POUR FORMER ET SCELLER UNE PLURALITÉ D'EMBALLAGES CONTENANT UN PRODUIT POUVANT ÊTRE VERSÉ ET ENSEMBLE D'EMBALLAGE

(30) Priority: 10.06.2022 EP 22178409
(43) Date of publication of application: 13.12.2023
(73) Proprietor: Tetra Laval Holdings & Finance S.A., 1009 Pully (CH)
(72) Inventor: DOMATI, Luca, 41123 Modena (IT); DIOZZI, Gian-Luca, 41123 Modena (IT); BONONI, Massimiliano, 41123 Modena (IT); FERRARI, Fabio, 41123 Modena (IT); ORSINI, Ivan, 41123 Modena (IT); JAYARAMAN, Matthew, 41123 Modena (IT); GAFNER, Fabian, 41123 Modena (IT)
(74) Representative: Tetra Pak - Patent Attorneys SE

(56) References cited:
- EP-A1- 1 526 074
- EP-A1- 3 321 192
- EP-B1- 2 655 195
- WO-A1-2019/158676

## Description

### TECHNICAL FIELD

The present invention relates to a forming device for a packaging assembly for forming and sealing a plurality of packages containing a pourable product, preferably a pourable food product.

The present invention also relates to a packaging assembly for forming and sealing a plurality of packages containing a pourable product, preferably a pourable food product.

In particular, the present invention relates to a packaging assembly configured to fill, form, seal, cut and fold packages containing the pourable product starting from a tube of packaging material.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Such packages are usually produced in fully automatic packaging assemblies, in which a continuous tube is formed starting from a web of packaging material initially wound in a reel and fed through a plurality of unwinding rollers of such packaging assembly. The web of packaging material is sterilized in the packaging assembly, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, advanced by the aforementioned unwinding rollers, is folded and sealed longitudinally to form the tube by means of a known web folding device.

The tube is fed continuously along a first direction, normally a straight vertical direction, is filled with the sterilized food product from above and is formed, sealed and subsequently cut along equally spaced transversal cross-sections extending along a second direction, normally a direction orthogonal to the first direction. So-called pillow packs are obtained thereby, which have a longitudinal sealing band, a top transversal sealing band and a bottom transversal sealing band. The pillow packs are then cut at the cross-sections to be separated from one another and directed to a folding device of the packaging assembly for the final folding thereof.

In order to perform the forming and sealing operations, the known packaging assemblies comprise a forming device configured to form the tube, so as to give an external shape to the tube corresponding to the desired shape of the package, and a sealing device configured to seal the tube at equally spaced cross-sections orthogonal to the tube advancement direction.

A packaging assembly of the above type is known from WO-A-2007114752. Such packaging assembly comprises a pair of alternately movable forming and sealing jaws which are controllable with a reciprocating movement in the first direction and in a third direction orthogonal to the first direction and second direction to interact with the tube at successive portions thereof.

In particular, the jaws are guided and driven by a pair of driving and guiding rods to which the tube runs parallel.

The forming device comprises at least one pair of forming members, typically in the form of shells (or half-shells), arranged at opposite lateral sides of the tube of packaging material, facing one another and cyclically surrounding, in use, successive portions of the tube to sequentially impart or transfer the predetermined external shape to these portions.

For each jaw, the sealing device is arranged operatively downstream of the forming device, with respect to the first direction, and comprises at least one pair of sealing elements, typically in the form of clamps, arranged at opposite lateral sides of the tube of packaging material facing one another and cyclically gripping between them, in use, successive equally spaced transversal cross-sections of the tube to seal the tube at these transversal cross-sections, thereby forming the pillow packs.

In detail, the sealing device comprises two sealing elements: a sealing member carrying heating means and a countersealing member defining an abutment surface for the heating means to abut against.

In greater detail, each tube portion gripped between the sealing elements is heat-sealed by the heating means, which locally melt, in use, the heat-sealable plastic material in the gripped region.

In some embodiments in which the layer of barrier material is defined by a sheet of electrically conductive material, e.g. a sheet of aluminum, the heat-sealing is obtained by means of induction. In such a case, the heating means comprise an inductor which is carried by the sealing member, is supplied by a highfrequency current generator, and is substantially defined by a coil comprising one or more induction bars made of electrically conductive material, extending parallel to the second direction, and which interact with and induce an electric current in the packaging material to heat the packaging material to the required heat-seal temperature.

In other embodiments, the heat-sealing is obtained by providing ultrasounds for locally melting the plastic material. In such cases, the heating means comprise a sonotrode carried by the sealing member.

The countersealing member comprises a pressure arrangement, preferably two pressure pads made of elastomeric material in the case of induction heat-sealing, or a pressure anvil made of metal in the case of ultrasonic sealing, having respective front contact surfaces defining the above-mentioned abutment surface.

Once the heat-sealing operation is completed, a cutting member carried by one of the two sealing elements, normally the countersealing member, is activated, thereby interacting with the tube of packaging material to cut the tube along the respective previously-created sealing band, and so separating (cutting) a pillow pack from the bottom end of the tube of packaging material. Typically, the cutting member is extracted from a slot of the countersealing member to engage a corresponding recess of the sealing member.

Once the cutting operation is completed, the sealing member and the countersealing member are moved away from one another to be ready to grip another subsequent portion of the tube. A lightweight forming device with outer reinforcement structures is known from EP1526074A1.

Although the known forming devices and packaging assemblies are functionally valid, the Applicant has observed that they are prone to further improvements, in particular as per the total number of components, their overall weight, the maintenance, assembly and production thereof, and their flexibility and adaptability to packages of different formats (e.g. shape/size).

### DISCLOSURE OF INVENTION

It is therefore an object of the present invention to provide a forming device, and a packaging assembly, which are designed to meet at least one of the above-mentioned needs in a straightforward and low-cost manner.

This object is achieved by a forming device, and a packaging assembly, as claimed in the appended claims.

### BRIEF DESCRIPTION OF THE DRAWINGS

A non-limiting embodiment of the present invention will be described by way of example with reference to the accompanying drawings, in which:
Figure 1 is a perspective view, with parts removed for clarity, of a packaging assembly for producing packages filled with pourable product and comprising a forming device according to the present invention;
Figure 2 is a larger-scale schematic lateral view, with parts removed for clarity, of part of the packaging assembly in which the forming device is visible;
Figure 3 is a larger-scale perspective view, partially sectioned and with parts removed for clarity, of a forming member of the forming device according to the invention;
Figure 4 is a larger-scale, sectioned perspective view, with parts removed for clarity of part of the forming member of Figure 3;
Figure 5 is a perspective view, partially sectioned and with parts removed for clarity, of the forming member of Figure 3; and
Figure 6 is a perspective view, partially sectioned and with parts removed for clarity, of the forming member of Figure 3.

### BEST MODE FOR CARRYING OUT THE INVENTION

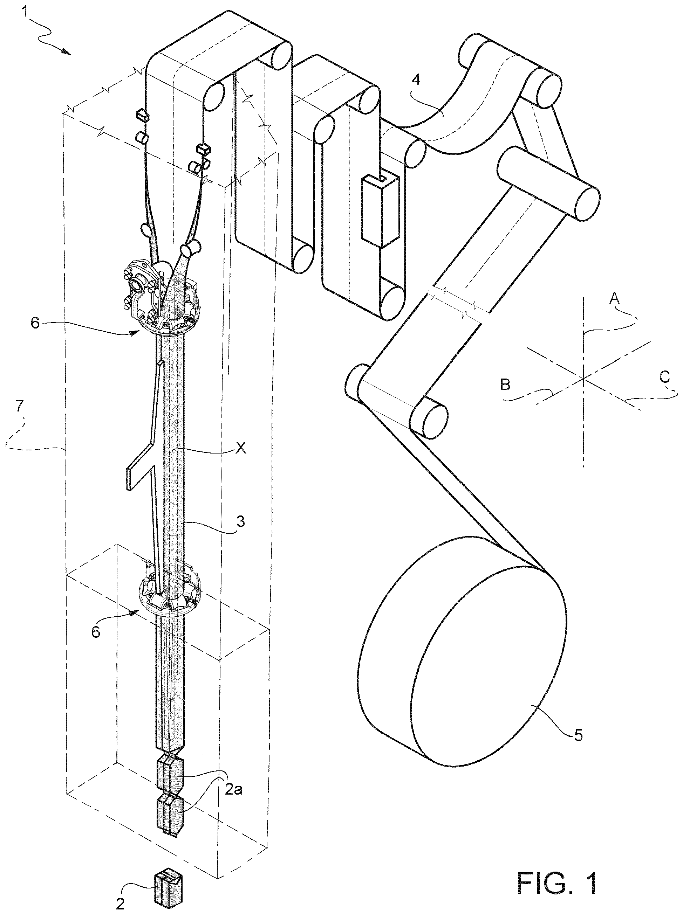

With reference to Figure 1, number 1 indicates as a whole a packaging assembly for producing a plurality of sealed packages 2 containing a pourable product, preferably a pourable food product such as pasteurized or UHT milk, water, fruit juice, wine, peas, beans, etc. starting from a tube 3 of packaging material.

In detail, packaging assembly 1 is configured to form tube 3 starting from a web-like sheet 4 of packaging material, which is unwound off a reel 5 and fed along a forming path.

In greater detail, packaging assembly 1 is configured to form and seal a plurality of pillow packs 2a containing the pourable product starting from tube 3 and then to fold pillow packs 2a for obtaining the aforementioned formed, sealed and folded packages 2 containing pourable product.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

Conveniently, after being unwound off reel 5 and before being formed into tube 3, sheet 4 of packaging material is sterilized, e.g. by applying a chemical sterilizing agent, such as hydrogen peroxide solution, which, once sterilization is completed, is removed from the surfaces of the packaging material, e.g. evaporated by heating.

Then, packaging assembly 1 is configured to perform, sequentially, the following operations:
- longitudinally folding sheet 4 of packaging material to obtain tube 3 by means of folding means 6, known per se and not described in detail, and longitudinally sealing tube 3 to form a longitudinal sealing band;
- filling tube 3 (from above) with the pourable product;
- forming tube 3 at successive portions thereof to impart or transfer a predetermined external shape to such portions;
- transversally sealing tube 3 at equally spaced cross sections, so that pillow packs 2a are obtained;
- cutting tube 3 at the above-mentioned cross sections to separate pillow packs 2a from one another; and
- folding pillow packs 2a to obtain fully folded packages 2.

Conveniently, packaging assembly 1 comprise an isolation chamber 7 defining an inner environment, in particular an inner sterile environment containing a sterile gas and separated from an outer environment. Advantageously, the operations of longitudinally sealing tube 3 and forming tube 3 are carried out within the isolation chamber 7.

Packaging assembly 1 comprises a forming and sealing apparatus for forming and sealing pillow packs 2a and having a longitudinal axis X along which tube 3 is fed.

That is, in use, tube 3 is fed continuously along a first direction A parallel to axis X, in particular a straight vertical direction.

While being fed along axis X, tube 3 is filled from above with the pourable product, in a manner known and not described in detail.

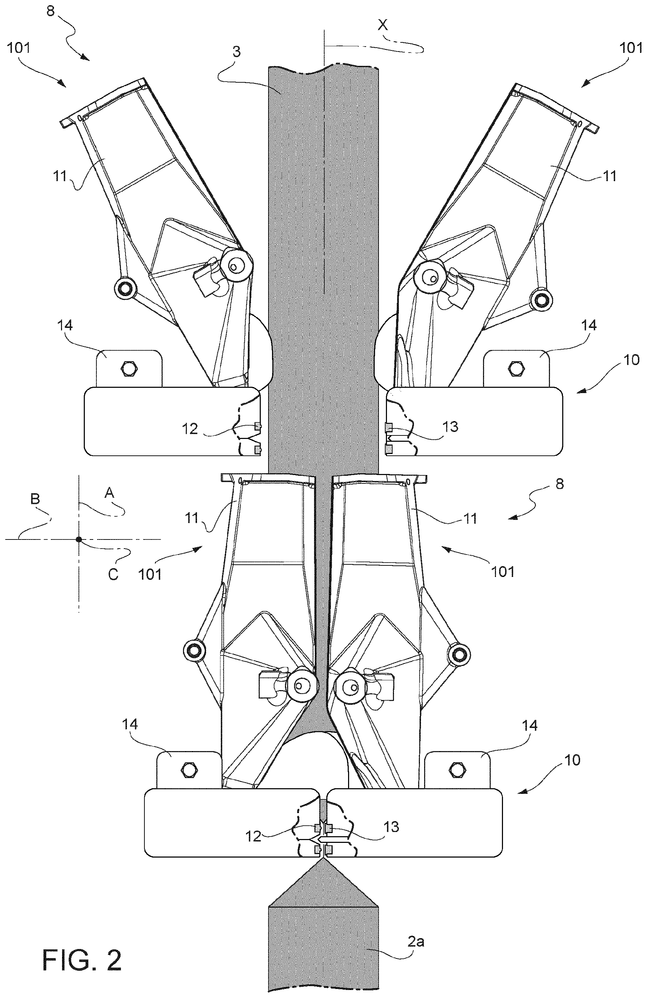

As visible in Figure 2, the forming and sealing apparatus comprises a forming device 8 and a sealing device 10.

Forming device 8 comprises at least one pair of forming members 101, preferably embodied as forming shells 11 arranged facing one another at opposite sides of axis X, i.e. at opposite sides of tube 3, in use.

According to a manner known and not described in detail herein, forming shells 11 are repeatedly movable towards and away from one another (and towards and away from tube 3) to cyclically cooperate with tube 3 for imparting or transferring a predetermined external shape thereto.

More specifically, each forming shell 11 is defined by a half-shell having a substantially C-shaped cross section, so that forming members 101 are configured to cyclically surround, by means of said movement, successive portions of tube 3, thereby sequentially imparting the predetermined external shape to such portions of tube 3.

In particular, forming shells 11 are movable towards one another along a second direction B transversal, more in particular orthogonal, to first direction A and axis X.

Furthermore, forming shells 11 are movable in a reciprocate manner along the first direction A so as to follow the advancement of tube 3 along axis X.

Conveniently, the forming and sealing apparatus comprises two forming devices 8, that is two pairs of forming shells 11, each pair being movable in the aforementioned reciprocate manner.

More precisely, the speed of each pair of forming shells 11 along first direction A matches, in use, the advancing speed of tube 3 along axis X, so that the forming shells 11 of each pair can surround the respective portion, cyclically and correctly impart or transfer the desired shape thereon.

In detail, tube 3 is fed along axis X downwards. Hence, forming shells 11 are moved downwards to follow and surround one portion of tube 3.

Then, once the forming is completed, forming shells 11 detach from such tube portion and are moved upwards and then follow a subsequent tube portion to repeat the forming operation thereon.

The two pairs of forming shells 11 perform the above operation in an alternate manner, thereby forming successive portions of tube 3.

Sealing device 10 is configured to repeatedly seal tube 3 at equally spaced cross-sections thereof which are orthogonal to the tube advancement direction, i.e. orthogonal to axis X and first direction A.

In detail, as schematically shown in Figure 2, sealing device 10 has a sealing member 12 and a countersealing member 13 arranged at opposite sides of axis X, in particular at opposite sides of tube 3, and facing one another.

According to a known manner, sealing member 12 and countersealing member 13 are repeatedly movable towards and away from one another to cyclically cooperate with one another thereby clamping tube 3 in a jaw-like manner at said cross-sections for sealing tube 3 and defining transversal sealing bands which extend along a third direction C orthogonal to both first direction A and second direction B.

Conveniently, the forming and sealing apparatus comprises two sealing devices 10, each one of which is integral in motion along axis X (and first direction A) with a respective pair of forming shells 11.

In detail, for each sealing device 10 and for each pair of forming shells 11, sealing member 12 is integral with one forming shell 11 and preferably arranged below forming shell 11, and countersealing member 13 is integral with the other forming shell 11 and preferably arranged below forming shell 11.

To this end, packaging assembly 1 comprises at least one, in particular two pairs of arms 14. The arms 14 of each pair of arms 14 are arranged at opposite sides of axis X, in particular at opposite sides of tube 3 and carry one pair of forming shells 11 and one sealing device 10. In particular, one arm 14 of each pair of arms 14 carries one forming shell 11 and sealing member 12 of sealing device 10 and the other arm 14 of each pair of arms 14 carries the other forming shell 11 and countersealing element 13 of sealing device 10.

For each pair of arms, arms 14 are:
- movable towards and away from one another along a direction transversal to axis A, in particular along second direction B; and
- movable in a reciprocate manner along first direction A, so as to follow the advancement of tube 3 along axis X.

Such kind of reciprocating, alternate and cyclical movement of arms 14, and of forming shells 11, sealing member 12 and countersealing member 13 is well-known and described, for example, in WO-A-2007114752.

In this way, arms 14 of each pair control and determine the movement of the respective pair of forming shells 11 and the movement of the respective sealing device 10.

In practice, arms 14 define alternately movable forming and sealing jaws, which are controllable with a reciprocating movement in first direction A and in second direction B to interact with tube 3 at successive portions thereof.

For the sake of brevity, reference will be made in the following to a single forming shell 11. However, the functional and structural features of such forming shell 11 are equally applicable to each forming shell 11 of forming device 8.

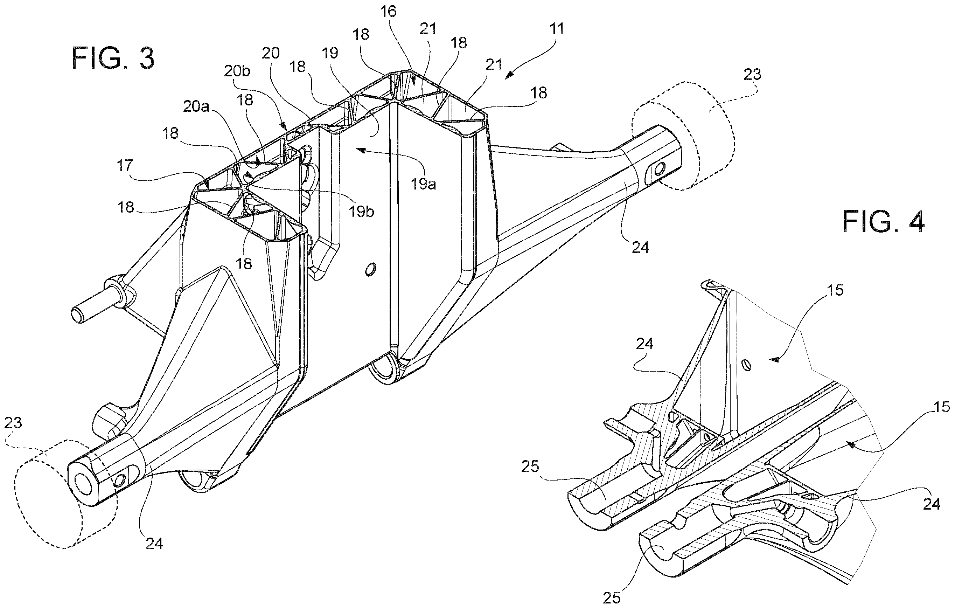

According to the invention, and as visible in Figures 3, 5 and 6, forming shell 11 comprises:
- a hollow body 15 configured to externally cooperate in contact with tube 3 and internally delimiting an inner cavity 16; and
- a reinforcing inner structure 17 housed in cavity 16, surrounded by hollow body 15 and configured to reinforce hollow body 15.

More specifically, forming shell 11 is defined by a hollow, C-shaped half-shell 15 internally delimiting cavity 16, with structure 17 arranged within cavity 16.

According to a known embodiment, forming shell 11 has a main wall and two side walls projecting orthogonally from the main wall, thereby defining the aforementioned C-shape.

Reinforcing inner structure 17 comprises a lattice structure distributed within cavity 16.

In particular, structure 17 comprises a lattice macro-structure, i.e. a lattice structure having an appreciable percentage of voids over solids, in particular appreciable to the naked eye.

Advantageously, the lattice structure has a plurality of beams 18 extending within cavity 16.

In detail, cavity 16 extends within hollow body 15 longitudinally with respect to axis X and first direction A, and beams 18 extend within cavity 16 longitudinally with respect to axis X and first direction A.

More specifically, hollow body 15 comprises:
- a first wall 19 having a first outer surface 19a for cooperating in contact with tube 3 and a first inner surface 19b opposite to first outer surface 19a and partially delimiting cavity 16; and
- a second wall 20 having a second inner surface 20a facing first inner surface 19b and partially delimiting cavity 16, and a second outer surface 20b opposite to second inner surface 20a.

Each beam 18 extends transversally within cavity 16 from first inner surface 19b up to second inner surface 20a.

That is, each beam 18 extends transversally between first inner surface 19b and second inner surface 20a.

Thanks to this configuration, structural stiffness of hollow body 15 is ensured, while providing for a forming shell 11 of lesser weight.

According to this preferred embodiment, first wall 19 is a front wall of forming shell 11 and second wall 20 is a rear wall of forming shell 11, with respect to axis X or tube 3.

Both first wall 19 and second wall 20 have a C-shaped profile, for defining said C-shape of forming shell 11.

As visible in Figure 3, 5 and 6, beams 18 are defined by elongated plates extending (longitudinally) within cavity 16 to define a plurality of longitudinal passages (or chambers, or cells, or voids) 21 each having a prismatic cross-section.

In detail, for each passage 21, two sides of the respective prismatic cross-section are defined by a pair of opposite beams 18.

In light of the above, beams 18 extend within cavity 16 intersecting with first wall 19 and second wall 20 of hollow body 15, and without intersecting with one another.

According to an alternative embodiment not shown, beams 18 extend within cavity 16 intersecting with first wall 19, second wall 20 and with one another, as to form a reticulate inner structure.

Preferably, passages 21 are separated from one another.

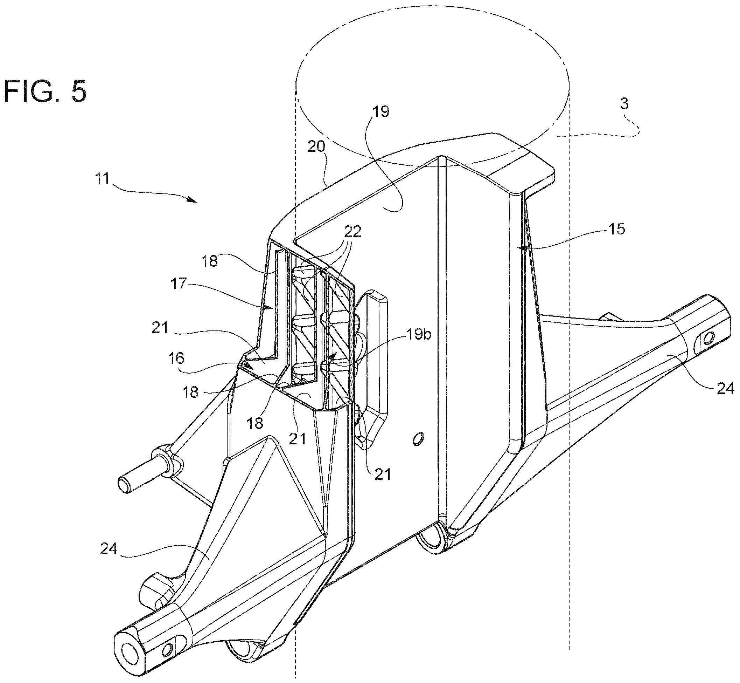

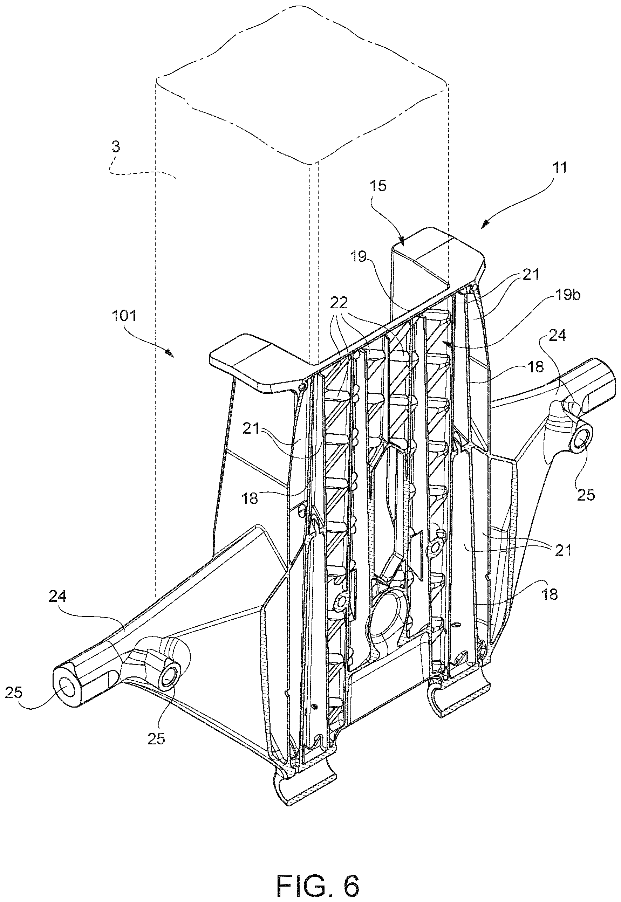

As visible in Figures 5 and 6, reinforcing inner structure 17 further comprises a plurality of ribs 22 extending on first inner surface 19b and protruding therefrom towards cavity 16.

Conveniently, ribs 22 are arranged to define a raised lattice that extends on first inner surface 19b, as shown in Figures 5 and 6.

In this way, hollow body 15 is further reinforced in its most stressed part, i.e. where the forming shell 11 cooperates in contact with tube 3.

Preferably, reinforcing inner structure 17 comprises a further plurality of ribs (not shown) extending on second inner surface 20a and protruding therefrom towards cavity 16.

Conveniently, also the ribs of said further plurality of ribs are arranged to define a raised lattice that extends on second inner surface 20a.

In this way, hollow body 15 is even more reinforced and thus able to better withstand the loads exerted, in use, thereon.

Advantageously, the density of reinforcing inner structure 17, both of lattice structure (i.e. beams 18) and ribs 22, is variable (non-constant) within cavity 16.

For example, such density is higher at the most stressed points and lower at the least stressed points, thereby saving material and reducing weight while ensuring appropriate mechanical properties.

According to an important aspect of the invention, hollow body 15 and reinforcing inner structure 17 are formed in one piece without solution of continuity, so that forming shell 11 is formed in one piece without solution of continuity.

Advantageously, forming shell 11 is obtained by additive manufacturing.

In a preferred embodiment, forming shell 11 is made of metal, such as titanium or stainless steel.

Conveniently, forming device 8 comprises, for each forming shell 11, at least one cam follower 23 coupled to the respective forming shell 11 for cooperating with a cam surface (known per se and not shown) of packaging assembly 1 to control the movement of forming shells 11 towards and away from one another.

In particular, each forming shell 11 carries two cam followers 23 at respective lateral portions 24 thereof extending from hollow body 15 in opposite directions along third direction C.

Expediently, forming shell 11 comprises at least one, in particular two, lubrication ducts 25 for conveying a lubricating medium towards the respective cam follower 23. In detail, each lubrication channel 25 is configured to receive the lubricating medium from a known source thereof and to convey the received lubricating medium at the respective cam follower 23.

According to one aspect of the invention, each lubrication duct 25 is formed in one piece, without solution of continuity, with hollow body 15.

In particular, each lateral portion 24 internally defines one lubrication duct 25, as visible in Figure 4.

Advantageously, each lateral portion 24 is formed in one piece, without solution of continuity, with hollow body 15.

More specifically, lateral portions 24 are formed together with hollow body 15 by additive manufacturing, so that lubrication ducts 25 are formed together with hollow body 15, thereby defining further inner cavities of the hollow body 15 itself, distinct and separated from cavity 16.

The operation of packaging assembly 1 is described hereinafter with reference to a single pair of arms 14 and starting from a condition in which arms 14 are moving downward along first direction A to match the advancing speed of tube 3.

In this condition, forming shells 11 start to move towards one another, as well as sealing member 12 and countersealing member 13.

Sealing member 12 and countersealing member 13 grip tube 3 thereby sealing it and creating a transversal sealing band along third direction C.

Soon after, forming shells 11 surround tube 3 imparting the desired external shape thereto.

Once forming and sealing are finished, forming shells 11 are moved away from one another, as well as sealing member 12 and countersealing member 13.

The advantages of forming device 8 and packaging assembly 1 according to the present invention will be clear from the foregoing description.

In particular, thanks to the peculiar configuration of forming shells 1, i.e. being hollow and internally reinforced, the weight of forming device 8 is substantially reduced, while ensuring an appropriate stiffness and resistance.

Also, the total number of components is heavily reduced, since each forming shell 11 is now defined by a single component, also including lubrication ducts 25, instead of a large number of parts and fastening elements for coupling such parts together. Accordingly, maintenance, assembly and production thereof are largely eased.

Moreover, flexibility and adaptability of forming device 8 to packages 2 of different formats is improved, since it is sufficient to vary the conformation of reinforcing inner structure 17 (such as shape, dimension and/or density of beams 18) to different types of load profiles exerted by different packages 2 being formed, during production.

Also, density of reinforcing inner structure 17, both of lattice structure (i.e. beams 18) and ribs 22, could be non-constant within cavity 16, for example being higher at the most stressed points and lower at the least stressed points, thereby saving material, reducing weight while ensuring appropriate mechanical properties.

The reduced weight also determines lower stress on the servomotors configured to move arms 14 and a smoother torque trend thereon.

The presence of ribs 22 allows for a thinner first wall 19 and second wall 20, while ensuring sufficient stiffness of such walls.

Clearly, changes may be made to forming device 8 and packaging assembly 1 as described herein without, however, departing from the scope of protection as defined in the accompanying claims.

## Claims

1. Forming device (8) for a packaging assembly (1) configured to form and seal a plurality of packages (2) containing a pourable product starting from a tube (3) of packaging material,
the forming device (8) comprising a pair of forming members (101) facing one another and movable towards and away from one another to cyclically cooperate in contact with successive portions of the tube (3) for imparting or transferring a predetermined external shape thereto;
**characterized in that** each forming member (101) comprises:
- a hollow body (15) configured to externally cooperate in contact with the tube (3) and internally delimiting an inner cavity (16); and
- a reinforcing inner structure (17) housed in the cavity (16) and surrounded by the hollow body (15) to reinforce the hollow body (15).

2. Forming device as claimed in claim 1, wherein each forming member (101) is defined by a hollow half-shell internally delimiting said cavity (16) and having a substantially C-shaped cross section, so that the forming members (101) cyclically surround said successive portions of the tube (3).

3. Forming device as claimed in claim 1 or 2, wherein the reinforcing inner structure (17) comprises a lattice structure, in particular a lattice macro-structure, distributed within said cavity (16).

4. Forming device as claimed in claim 3, wherein the lattice structure has a plurality of beams (18) extending within said cavity (16).

5. Forming device as claimed in claim 4, wherein the hollow body (15) comprises:
- a first wall (19) having a first outer surface (19a) for cooperating in contact with the tube (3) and a first inner surface (19b) opposite to the first outer surface (19a) and partially delimiting said cavity (16); and
- a second wall (20) having a second inner surface (20a) facing the first inner surface (19b) and partially delimiting said cavity (16), and a second outer surface (20b) opposite to the second inner surface (20a);
and wherein each beam (18) extends within said cavity (16) from the first inner surface (19b) up to the second inner surface (20a).

6. Forming device as claimed in claim 5, wherein the beams (18) are defined by elongated plates extending within the cavity (16) to define a plurality of longitudinal passages (21) each having a prismatic cross-section,
and wherein, for each passage (21), two sides of the respective prismatic cross-section are defined by a pair of opposite beams (18).

7. Forming device as claimed in claim 5 or 6, wherein the reinforcing inner structure (17) further comprises a plurality of ribs (22) extending at least on said first inner surface (19b) and protruding therefrom towards said cavity (16).

8. Forming device as claimed in claim 7, wherein the ribs (22) are arranged to define a raised lattice that extends on said first inner surface (19a).

9. Forming device as claimed in claim 7 or 8, wherein the reinforcing inner structure comprises a further plurality of ribs extending onto said second inner surface (20a) and protruding therefrom towards said cavity (16).

10. Forming device as claimed in claim 9, wherein the ribs of said further plurality of ribs are arranged to define a raised lattice that extends on said second inner surface (20a).

11. Forming device as claimed in any one of the foregoing claims, wherein the hollow body (15) and the reinforcing inner structure (17) are formed in one piece without solution of continuity, so that each forming member (101) is formed in one piece without solution of continuity.

12. Forming device as claimed in claim 11, wherein each forming member (101) is obtained by additive manufacturing.

13. Forming device as claimed in claim 11 or 12, and comprising, for each forming member (101), at least one cam follower (23) for cooperating with a cam surface of the packaging assembly (1) to control movement of the forming members (101) towards and away from one another;
wherein each forming member (101) comprises at least one lubrication duct (25) for conveying a lubricating medium towards said cam follower (23);
and wherein the lubrication duct (25) is formed in one piece, without solution of continuity, with the hollow body (15).

14. Forming device as claimed in claim 13, wherein each forming member (101) comprises at least one lateral portion (24) extending from said hollow body (15), carrying said cam follower (23) and internally defining said lubrication duct (25);
and wherein said lateral portion (24) is formed in one piece, without solution of continuity, with said hollow body (15).

15. Packaging assembly (1) for forming and sealing a plurality of packages (2) containing a pourable product starting from a tube (3) of packaging material,
the packaging assembly (1) comprising:
- a longitudinal axis (X) along which the tube (3) is fed, in use;
- a sealing device (10) for sealing the tube (3) at successive cross-section thereof and having a sealing member (12) and a countersealing member (13) arranged at opposite sides of the longitudinal axis; and
- a forming device (8) as claimed in any one of the foregoing claims.

## Patentansprüche

1. Formungsvorrichtung (8) für eine Verpackungsanordnung (1), die dazu ausgelegt ist, mehrere Verpackungen (2), die ein gießbares Produkt enthalten und aus einem Schlauch (3) aus Verpackungsmaterial entstehen, zu formen und zu verschweißen;
wobei die Formungsvorrichtung (8) ein Paar Formungselemente (101) umfasst, die einander zugewandt sind und aufeinander zu und voneinander weg beweglich sind, um in Kontakt mit aufeinanderfolgenden Abschnitten des Schlauchs (3) zyklisch zusammenzuwirken, um diesen eine festgelegte äußere Form zu verleihen oder darauf zu übertragen;
**dadurch gekennzeichnet, dass** jedes Formungselement (101) Folgendes umfasst:
- einen Hohlkörper (15), der dazu ausgelegt ist, von außen in Kontakt mit dem Schlauch (3) zusammenzuwirken und von innen einen Hohlraum (16) zu begrenzen; und
- eine verstärkende Innenstruktur (17), die in dem Hohlraum (16) aufgenommen und von dem Hohlkörper (15) umgeben ist, um den Hohlkörper (15) zu verstärken.

2. Formungsvorrichtung nach Anspruch 1, wobei jedes Formungselement (101) durch eine hohle Halbschale definiert ist, die den Hohlraum (16) innen begrenzt und einen im Wesentlichen C-förmigen Querschnitt aufweist, sodass die Formungselemente (101) die aufeinanderfolgenden Abschnitte des Schlauchs (3) zyklisch umgeben.

3. Formungsvorrichtung nach Anspruch 1 oder 2, wobei die verstärkende Innenstruktur (17) eine Gitterstruktur, insbesondere eine Gitter-Makrostruktur, umfasst, die in dem Hohlraum (16) verteilt ist.

4. Formungsvorrichtung nach Anspruch 3, wobei die Gitterstruktur mehrere Streben (18) aufweist, die sich in dem Hohlraum (16) erstrecken.

5. Formungsvorrichtung nach Anspruch 4, wobei der Hohlkörper (15) Folgendes umfasst:
- eine erste Wand (19) mit einer ersten Außenfläche (19a), um mit dem Schlauch (3) in Kontakt zusammenzuwirken, und einer ersten Innenfläche (19b), die der ersten Außenfläche (19a) entgegengesetzt ist und den Hohlraum (16) teilweise begrenzt; und
- eine zweite Wand (20) mit einer zweiten Innenfläche (20a), die der ersten Innenfläche (19b) entgegengesetzt ist und den Hohlraum (16) teilweise begrenzt, und einer zweiten Außenfläche (20b), die der zweiten Innenfläche (20a) entgegengesetzt ist;
und wobei sich jede Strebe (18) in dem Hohlraum (16) von der ersten Innenfläche (19b) zur zweiten Innenfläche (20a) erstreckt.

6. Formungsvorrichtung nach Anspruch 5, wobei die Streben (18) durch längliche Platten definiert sind, die sich in dem Hohlraum (16) erstrecken, um mehrere Längskanäle (21) zu definieren, die jeweils einen prismatischen Querschnitt aufweisen,
und wobei bei jedem Kanal (21) zwei Seiten des jeweiligen prismatischen Querschnitts durch ein Paar entgegengesetzte Streben (18) definiert sind.

7. Formungsvorrichtung nach Anspruch 5 oder 6, wobei die verstärkende Innenstruktur (17) ferner mehrere Rippen (22) umfasst, die sich zumindest auf der ersten Innenfläche (19b) erstrecken und davon in Richtung Hohlraum (16) vorstehen.

8. Formungsvorrichtung nach Anspruch 7, wobei die Rippen (22) dazu angeordnet sind, ein erhabenes Gitter zu definieren, das sich auf der ersten Innenfläche (19a) erstreckt.

9. Formungsvorrichtung nach Anspruch 7 oder 8, wobei die verstärkende Innenstruktur weitere mehrere Rippen umfasst, die sich auf der zweiten Innenfläche (20a) erstrecken und davon in Richtung Hohlraum (16) vorstehen.

10. Formungsvorrichtung nach Anspruch 9, wobei die Rippen der weiteren mehreren Rippen dazu angeordnet sind, ein erhabenes Gitter zu definieren, das sich auf der zweiten Innenfläche (20a) erstreckt.

11. Formungsvorrichtung nach einem der vorstehenden Ansprüche, wobei der Hohlkörper (15) und die verstärkende Innenstruktur (17) einstückig ohne Unterbrechung ausgebildet sind, sodass jedes Formungselement (101) einstückig ohne Unterbrechung ausgebildet ist.

12. Formungsvorrichtung nach Anspruch 11, wobei jedes Formungselement (101) durch additive Fertigung erhalten wird.

13. Formungsvorrichtung nach Anspruch 11 oder 12 und für jedes Formungselement (101) mindestens einen Nockenstößel (23) umfassend, um mit einer Nockenfläche der Verpackungsanordnung (1) zusammenwirken, um die Bewegung der Formungselemente (101) aufeinander zu und voneinander weg zu steuern;
wobei jedes Formungselement (101) mindestens einen Schmierkanal (25) umfasst, um ein Schmiermittel zum Nockenstößel (23) zu befördern;
und wobei der Schmierkanal (25) einstückig ohne Unterbrechung mit dem Hohlkörper (15) ausgebildet ist.

14. Formungsvorrichtung nach Anspruch 13, wobei jedes Formungselement (101) mindestens einen lateralen Abschnitt (24) umfasst, der sich von dem Hohlkörper (15) erstreckt, den Nockenstößel (23) trägt und den Schmierkanal (25) innen definiert
und wobei der laterale Abschnitt (24) einstückig ohne Unterbrechung mit dem Hohlkörper (15) ausgebildet ist.

15. Verpackungsanordnung (1) zum Formen und Verschweißen mehrerer Verpackungen (2), die ein gießbares Produkt enthalten und aus einem Schlauch (3) aus Verpackungsmaterial entstehen,
wobei die Verpackungsanordnung (1) Folgendes umfasst
- eine Längsachse (X), entlang derer der Schlauch (3) bei der Verwendung gespeist wird;
- eine Schweißvorrichtung (10) zum Verschweißen des Schlauchs (3) an aufeinanderfolgenden Querschnitten dessen, die ein Schweißelement (12) und ein Gegenschweißelement (13) aufweist, die auf entgegengesetzten Seiten der Längsachse angeordnet sind; und
- eine Formungsvorrichtung (8) nach einem der vorstehenden Ansprüche.

## Revendications

1. Dispositif de formage (8) pour un ensemble d'emballage (1) conçu pour former et sceller une pluralité d'emballages (2) contenant un produit versable à partir d'un tube (3) de matériau d'emballage,
le dispositif de formage (8) comprenant une paire d'éléments de formage (101) se faisant face et déplaçables de façon à les rapprocher et les éloigner l'un de l'autre afin qu'ils coopèrent de manière cyclique en contact avec des parties successives du tube (3) pour leur donner ou leur transférer une forme extérieure prédéterminée ;
**caractérisé en ce que** chaque élément de formage (101) comprend :
- un corps creux (15) conçu pour coopérer extérieurement en contact avec le tube (3) et délimitant intérieurement une cavité intérieure (16) ; et
- une structure intérieure de renforcement (17) logée dans la cavité (16) et entourée par le corps creux (15) pour renforcer le corps creux (15).

2. Dispositif de formage selon la revendication 1, dans lequel chaque élément de formage (101) est défini par une demi-coque creuse délimitant intérieurement ladite cavité (16) et présentant sensiblement une section transversale en forme de C, de telle sorte que les éléments de formage (101) entourent cycliquement lesdites parties successives du tube (3).

3. Dispositif de formage selon la revendication 1 ou 2, dans lequel la structure intérieure de renforcement (17) comprend une structure en treillis, en particulier une macrostructure en treillis, répartie à l'intérieur de ladite cavité (16).

4. Dispositif de formage selon la revendication 3, dans lequel la structure en treillis comporte une pluralité de longerons (18) s'étendant à l'intérieur de ladite cavité (16).

5. Dispositif de formage selon la revendication 4, dans lequel le corps creux (15) comprend :
- une première paroi (19) comportant une première surface extérieure (19a) destinée à coopérer en contact avec le tube (3) et une première surface intérieure (19b) à l'opposé de la première surface extérieure (19a) et délimitant partiellement ladite cavité (16) ; et
- une seconde paroi (20) comportant une seconde surface intérieure (20a) faisant face à la première surface intérieure (19b) et délimitant partiellement ladite cavité (16), et une seconde surface extérieure (20b) à l'opposé de la seconde surface intérieure (20a) ; et dans lequel chaque longeron (18) s'étend à l'intérieur de ladite cavité (16) de la première surface intérieure (19b) à la seconde surface intérieure (20a).

6. Dispositif de formage selon la revendication 5, dans lequel les longerons (18) sont définis par des plaques allongées s'étendant à l'intérieur de la cavité (16) de façon à définir une pluralité de passages longitudinaux (21) présentant chacun une section transversale prismatique,
et dans lequel, pour chaque passage (21), deux côtés de la section transversale prismatique respective sont définis par une paire de longerons (18) opposés.

7. Dispositif de formage selon la revendication 5 ou 6, dans lequel la structure intérieure de renforcement (17) comprend, en outre, une pluralité de nervures (22) s'étendant au moins sur ladite première surface intérieure (19b) et faisant saillie à partir de celle-ci en direction de ladite cavité (16).

8. Dispositif de formage selon la revendication 7, dans lequel les nervures (22) sont agencées de façon à définir un treillis en relief qui s'étend sur ladite première surface intérieure (19a).

9. Dispositif de formage selon la revendication 7 ou 8, dans lequel la structure intérieure de renforcement comprend une autre pluralité de nervures s'étendant sur ladite seconde surface intérieure (20a) et faisant saillie à partir de celle-ci en direction de ladite cavité (16).

10. Dispositif de formage selon la revendication 9, dans lequel les nervures de ladite autre pluralité de nervures sont agencées de façon à définir un treillis en relief qui s'étend sur ladite seconde surface intérieure (20a).

11. Dispositif de formage selon l'une quelconque des revendications précédentes, dans lequel le corps creux (15) et la structure intérieure de renforcement (17) sont réalisés en une seule pièce sans solution de continuité, de telle sorte que chaque élément de formage (101) est réalisé en une seule pièce sans solution de continuité.

12. Dispositif de formage selon la revendication 11, dans lequel chaque élément de formage (101) est obtenu par fabrication additive.

13. Dispositif de formage selon la revendication 11 ou 12, et comprenant, pour chaque élément de formage (101), au moins un suiveur de came (23) destiné à coopérer avec une surface de came de l'ensemble d'emballage (1) afin de commander le déplacement des éléments de formage (101) de façon à les rapprocher et les éloigner l'un de l'autre ;
dans lequel chaque élément de formage (101) comprend au moins un conduit de lubrification (25) destiné à transporter une substance de lubrification en direction dudit suiveur de came (23) ;
et dans lequel le conduit de lubrification (25) est réalisé en une seule pièce, sans solution de continuité, avec le corps creux (15).

14. Dispositif de formage selon la revendication 13, dans lequel chaque élément de formage (101) comprend au moins une partie latérale (24) s'étendant à partir dudit corps creux (15), supportant ledit suiveur de came (23) et définissant intérieurement ledit conduit de lubrification (25) ;
et dans lequel ladite partie latérale (24) est réalisée en une seule pièce, sans solution de continuité, avec ledit corps creux (15).

15. Ensemble d'emballage (1) destiné à former et sceller une pluralité d'emballages (2) contenant un produit versable à partir d'un tube (3) de matériau d'emballage, l'ensemble d'emballage (1) comprenant :
- un axe longitudinal (X) le long duquel est acheminé le tube (3), durant l'utilisation ;
- un dispositif de scellage (10) destiné à sceller le tube (3) au niveau de sections transversales successives de celui-ci et comportant un élément de scellage (12) et un élément de contre-scellage (13) disposés sur des côtés opposés de l'axe longitudinal ; et
- un dispositif de formage (8) selon l'une quelconque des revendications précédentes.
